# EUROPÄISCHE PATENTSCHRIFT

(11) **EP 1 731 919 B1**
(45) Veröffentlichungstag und Bekanntmachung des Hinweises auf die Patenterteilung: **07.10.2009**
(21) Anmeldenummer: 05025296.4
(22) Anmeldetag: 19.11.2005
(51) Int. Cl.: G01S 5/02

(54) **Verfahren und System zur Lokalisierung eines mobilen WLAN-Clients**
Method and system for locating a mobile WLAN client
Procédé et système destinés à la localisation d 'un client WLAN mobile

(30) Priorität: 10.06.2005 DE 102005026788
(43) Veröffentlichungstag der Anmeldung: 13.12.2006
(73) Patentinhaber: Deutsche Telekom AG, 53113 Bonn (DE)
(72) Erfinder: Karge, Ralf, Dipl.-Ing., 67065 Ludwigshafen (DE); Gerst, Daniel, 67227 Frankenthal (DE)

(56) Entgegenhaltungen:
- US-A- 6 101 390
- US-A1- 2005 093 745
- US-A1- 2005 096 068
- US-B1- 6 393 294
- XIAOYONG CHAI ET AL: "Reducing the Calibration Effort for Location Estimation Using Unlabeled Samples" PERVASIVE COMPUTING AND COMMUNICATIONS, 2005. PERCOM 2005. THIRD IEEE INTERNATIONAL CONFERENCE ON KAUAI ISLAND, HI, USA 08-12 MARCH 2005, PISCATAWAY, NJ, USA,IEEE, 8. März 2005 (2005-03-08), Seiten 95-104, XP010779644 ISBN: 0-7695-2299-8
- TAHERI A ET AL: "Location Fingerprinting on Infrastructure 802.11 Wireless Local Area Networks Location Fingerprinting on Infrastructure 802.11 Wireless Local Area Networks" COMPUTATIONAL SYSTEMS BIOINFORMATICS CONFERENCE, 2004. CSB 2004. PROCEEDINGS. 2004 IEEE TAMPA, FL, USA 16-18 NOV. 2004, LOS ALAMITOS, CA, USA,IEEE (COMPUT. SOC, US, 16. November 2004 (2004-11-16), Seiten 676-683, XP010753174 ISBN: 0-7695-2260-2
- YOUSSEF M ET AL: "Handling samples correlation in the horus system" INFOCOM 2004. TWENTY-THIRD ANNUALJOINT CONFERENCE OF THE IEEE COMPUTER AND COMMUNICATIONS SOCIETIES HONG KONG, PR CHINA 7-11 MARCH 2004, PISCATAWAY, NJ, USA,IEEE, Bd. 2, 7. März 2004 (2004-03-07), Seiten 1023-1031, XP010740848 ISBN: 0-7803-8355-9

## Beschreibung

Die vorliegende Erfindung betrifft ein Verfahren sowie ein System zur Lokalisierung eines innerhalb eines WLAN-Netzes mit mehreren WLAN-Stationen befindlichen mobilen WLAN-Clients auf Basis des Szenenanalyseverfahrens, wobei Referenzpunkte durch Einmessen von Feldstärken der WLAN-Stationen an bekannten Ortskoordinaten mittels WLAN-Client ermittelt werden und eine datensatzmäßige Zuordnung der gemessenen Feldstärken zu den jeweiligen Ortskoordinaten im Datenbankserver erfolgt.

Mobile Endgeräte - wie PDA's oder Smartphones sind oftmals mit einer WLAN-Schnittstelle ausgestattet, um hierüber einen drahtlosen Datenaustausch zu ermöglichen. Unter anderem ermöglicht WLAN (Wireless Local Areä Network) eine Lokalisierung des sich innerhalb des Netzes aufhaltenden mobilen Endgeräts, wodurch standortbasierende Dienstleistungen, wie Navigation, möglich werden. Die zunehmende Abdeckung durch WLAN-Netze in Verkaufspassagen, an öffentlichen Plätzen, wie Bahnhöfen oder Flughäfen und in Unternehmen bestärken den Trend derartiger standortbasierender Dienstleistungen. Der Gegenstand der vorliegenden Erfindung konzentriert sich insbesondere auf eine Möglichkeit der Lokalisierung eines WLAN-Clients im Rahmen einer Indoor-Navigation mit PDA's auf Basis clientseitiger Feldstärkemessungen mittels einer Client-/Server-Architektur.

Die vorliegende Erfindung baut auf der Grundlage des Lokalisierungsverfahrens einer Szenenanalyse auf. Hierbei wird im Prinzip unter Zuhilfenahme vordefinierter Datensätze versucht, dem mobilen Endgerät als Client eine Position im Rahmen der analysierten Umgebung zuzuordnen. Das Grundprinzip der Szenenanalyse besteht darin, aktuell ablaufende Inhalte bzw. Ereignisse mit vordefinierten Mustern zu vergleichen. Ziel der Musterwahl ist es, eindeutige physikalische oder visuelle Merkmalscharakteristika des zu analysierenden Objekts zu erfassen. Mehrdeutigkeiten bei der Identifikation der Client-Position in der beobachteten netzabgedeckten Umgebung werden auf diese Weise zum größten Teil, mitunter auch komplett unterbunden. Nachteil der Szeneanalyse ist jedoch, dass ein entsprechend großer potentieller Datensatz vorhanden sein muss, um eine präzise Positionsbestimmung durchzuführen. Da des Weiteren eine GSM-Lokalisierung innerhalb geschlossener Gebäude nicht funktioniert, ist für sogenannte Indoor-Anwendungen ein WLAN-Netz zu favorisieren.

Aus dem Fachartikel "RADAR: An in-building AF - based user location and tracking system" von Paramvir Bahl und Venkata N. Padmanabhan (Firma Microsoft Research) geht ein konkretes Beispiel für die Realisierung einer WLAN-Lokalisierung u.a. mit Hilfe der Szenenanalyse hervor. Es wird hier eine Indoor-Navigation beschrieben, welche sich durch eine recht hohe Genauigkeit auszeichnet. Ein Nachteil dieser Lösung resultiert jedoch daraus, dass die Navigation lediglich auf ein Einmessen von Feldstärken der WLAN-Stationen an bekannten Ortskoordinaten basiert, also viele statische Referenzpunkte zur Berechnung einer geschätzten Position des WLAN-Clients herangezogen werden müssen. Um ein brauchbar genaues Navigationsergebnis zu erreichen, ist ein entsprechend hoher Aufwand erforderlich.

Die US 2005/0096068 offenbart ein Verfahren sowie ein System zur Lokalisierung eines innerhalb eines WLAN-Netzes mit mehreren Stationen befindlichen WLAN-Client. Zur Lokalisierung werden statische Referenzpunkte selektiert. Die Selektion erfolgt anhand des Szenenanalyseverfahrens. Die so selektierten statischen Referenzpunkte können nach anschließender Gewichtung zur Lokalisierung des WLAN-Clients herangezogen werden. Durch die statischen Referenzpunkte werden die bekannten Ortskoordinaten der WLAN-Stationen vorgegeben.

Als nachteilhaft bei dieser technischen Lösung erweist sich die durch die Anzahl der WLAN-Stationen begrenzte Zahl an statischen Referenzpunkten, welches die Genauigkeit des Navigationsergebnisses beeinträchtigt.

Es ist daher die Aufgabe der vorliegenden Erfindung, eine Lokalisierung eines innerhalb eines WLAN-Netzes befindlichen mobilen WLAN-Clients auf Basis der Szenenanalyse dahingehend weiter zu verbessern, dass mit einem vertretbaren technischen Aufwand eine möglichst genaue Lokalisierung des WLAN-Clients im WLAN-Netz auf Basis von Feldstärkenmessungen umliegender WLAN-Stationen ermöglicht wird.

Die Aufgabe wird ausgehend von einem Verfahren gemäß dem Oberbegriff von Anspruch 1 in Verbindung mit dessen kennzeichnenden Merkmalen gelöst. In systemtechnischer Hinsicht wird die Aufgabe durch Anspruch 12 gelöst. Die jeweils rückbezogenen abhängigen Ansprüche geben vorteilhafte Weiterbildungen der Erfindung wieder. Ein korrespondierendes Computerprogrammprodukt ist in Anspruch 16 angegeben.

Die Erfindung schließt die verfahrenstechnische Lehre ein, dass neben der bekannten Ermittlung von statischen Referenzpunkten eine selbstlernende Ermittlung von weiteren dynamischen Referenzpunkten erfolgt, und zwar durch Einmessen von Feldstärken der WLAN-Stationen mittels sich durch das Gebiet des WLAN-Netzes bewegenden WLAN-Clients und datensatzmäßige Zuordnung der so gemessenen Feldstärken zu den jeweils hierzu berechneten Ortskoordinaten, um eine Lokalisierung eines WLAN-Clients durch Selektieren von mehreren am nächsten passenden Datensätzen von statischen und dynamischen Referenzpunkten über das Szenenanalyseverfahren durchzuführen, deren anschließende Gewichtung der geschätzten Position des WLAN-Clients entspricht. Die Gewichtung wird vorzugsweise mittels Schwerpunktberechnung vorgenommen.

Der Vorteil der erfindungsgemäßen Lösung äußert sich in einer enormen Verbesserung in der Genauigkeit der geschätzten Position des WLAN-Clients bei nur wenigen statischen Referenzpunkten. Denn als Startbedingung sind nur wenige statische Referenzpunkte ausreichend, welche durch anfängliches Einmessen von Feldstärken an bekannten Ortskoordinaten bestimmt werden. Die weiteren zu der hohen Genauigkeit führenden Referenzpunkte werden als dynamische Referenzpunkte selbstlernend entsprechend der erfindungsgemäßen Lösung ermittelt. Auf dieser Basis ist eine raumgenaue Indoor-Navigations-Lösung machbar. Erste Versuche haben äußerst brauchbare Ergebnisse bereits schon nach einer Trainingsphase von ca. 3-4 Mitteilungen je dynamisch gesetztem Referenzpunkt ergeben. Trefferwahrscheinlichkeiten , also die Wahrscheinlichkeit dafür, dass sich der Client an der berechneten Position befindet, für hinreichend trainierte Gebiete im Bereich von 100 Mitteilungen je dynamischen Referenzpunkt betragen nahezu 99 %. Bewegt sich der WLAN-Client nicht schneller als 1,3 m/s, so ist eine Differenz der Entfernung zwischen geschätzter und tatsächlicher Position im Durchschnitt von +/- 2,5 m möglich. Das erfindungsgemäße Verfahren bietet, bedingt durch die zeitliche Mitteilung der dynamischen Referenzpunkte, auch ein gewisses Maß an Toleranz gegenüber Veränderungen der Umgebung, wie Umstellen von Möbeln und Pflanzen oder sich bewegende Personen. Zu beachten ist, dass nach wie vor die zu anfangs eingemessenen statischen Referenzpunkte notwendig sind. Sie gewährleisten das Startverhalten bei der erfindungsgemäßen Lösung. Die Anzahl der statischen Referenzpunkte ist proportional zum Startverhalten und repräsentiert das Grundwissen über das Gebiet des WLAN-Netzes. Je mehr Client-Bewegungen in diesem Gebiet stattfinden, desto präziser werden die Positionsbestimmungen von WLAN-Clients. Ein weiterer Vorteil der erfindungsgemäßen Lösung besteht darin, dass das zeitintensive geometrische Einmessverfahren zur Festlegung vieler statischer Referenzpunkte nicht mehr erforderlich ist. Detaillierte Informationen über ein Gebäude oder über ein Stockwerk eines Gebäudes sind nicht erforderlich. Aus diesem Grund lässt sich ein Durchqueren von eigentlich nicht passierbaren Hindernissen wie Wänden oder Stützpfeilern, nicht vermeiden. Die dynamische Kartenverfeinerung wirkt dieser Situation allerdings entgegen, da dynamische Referenzpunkte nur an solchen Stellen gesetzt werden können, in denen eine Bewegung seitens des WLAN-Clients überhaupt möglich ist.

Es hat sich herausgestellt, dass eine hinreichend genaue Lokalisierung eines WLAN-Clients möglich ist, wenn die drei am nächsten passenden Datensätze von statischen und dynamischen Referenzpunkten durch Anwendung des Szeneanalyseverfahrens selektiert werden. Diese drei am nächsten passenden Datensätze werden zu einem Referenz-Set zusammengefasst. Die Schätzung der Client-Position erfolgt über Clusteralgorithmen für die Ähnlichkeitsfindung, vorzugsweise das Euklidische Abstandsmaß. Mittels Schwerpunktberechnung der sich aus den vorzugsweise drei am nächsten passenden Datensätze ergebenen Koordinatenpunkte aufgespannten Dreiecksfläche wir die Clientposition ermittelt. Der mögliche Aufenthaltsradius des WLAN-Clients wird durch den geometrischen Abstand der geschätzten Position zu dem Referenzpunkt des Referenz-Sets mit dem größten Wert für das Euklidische Distanzmaß repräsentiert. Die hier praktizierte Feldstärkemustererkennung beruht konkret auf der Vorgehensweise, die drei benachbarten Referenzpunkte zu finden, zu denen das Euklidische Abstandsmaß am geringsten ist.
Für die Ähnlichkeitsbetrachtung werden nur diejenigen Werte miteinander verglichen, die durch die Messung repräsentiert werden. Dies reduziert den zu prüfenden Datenbestand enorm. Der zusätzliche Informationsgehalt, den ein Referenzpunkt an empfangenen WLAN-Stationen über die Messwerte hinaus beinhalten kann, wird bei der Ähnlichkeitsfindung nicht berücksichtigt. Informationsdefizite eines Referenzpunktes fließen mit dem Wert 0 ein; hierdurch zählt die empfangene Feldstärke zu 100 %. Somit ist auch dann noch eine Positionsbestimmung möglich, falls eine empfangene WLAN-Station nicht als Informationsgehalt in einem Referenzpunkt auftaucht. Das Verfahren ist aus diesen Gegebenheiten in der Lage, eine Positionsbestimmung auch dann durchzuführen, wenn eine WLAN-Station kurzzeitig nicht empfangen werden kann oder sogar ausfällt, sofern noch genügend WLAN-Stationen zur Positionsbestimmung gefunden werden können.

Gemäß einer die Erfindung verbessernden Maßnahme wird vorgeschlagen, dass eine gewichtete Verschiebung des Schwerpunktes zu dem besser passenden Referenzpunkt unter den am nächsten passenden Datensätzen der statischen und dynamischen Referenzpunkte durchgeführt wird. Hierdurch kann die Schätzung der Position maßgeblich verbessert werden.

Vorteilhafterweise können die Ortkoordinaten des durch das WLAN-Netz abgedeckten Gebiets nach dem erdzentrierten globalen Kartenreferenzsystem WGS-84 oder auch Gauss-Krüger und dergleichen festgelegt werden. Bei dem WGS-84 (World Geodenic System 1984) handelt es sich um ein geozentrisches, d.h. im Erdschwerpunkt gelagertes, dreidimensionales Koordinatensystem. Im Rahmen der vorliegenden Erfindung wird das WGS-84 als Bezugssystem zur absoluten Positionsbestimmung - insbesondere innerhalb von Gebäuden - nur vorzugsweise verwendet. Die WGS-84-Koordinaten werden gewöhnlich in Längen-und Breitengraden angegeben. Es ist natürlich auch möglich, andere geeignete Kartenreferenzsysteme zu verwenden.

Gemäß einer weiteren die Erfindung verbessernden Maßnahmen ist vorgesehen, dass die in Folge der Lokalisierung geschätzte Position des WLAN-Clients auf einer graphischen Abbildung des Gebiets des WLAN-Netzes visualisiert wird. Zu diesem Zwecke werden in der Abbildung die WGS-84-Ortskoordinaten zur Identifikation von Positionspunkten innerhalb der Abbildung zugeordnet. Die graphische Abbildung, welche beispielsweise ein Grundriss eines Gebäudes, ein Bauplan, ein Lageplan oder eine geographische Karte sein kann, ist selbst auf der graphischen Anzeige eines PDA's als WLAN-Client ausreichend detailliert darstellbar.

Zur Steigerung der Lokalisierungsgenauigkeit wird vorgeschlagen, eine dynamische Mittlung in der selektierten an nächsten passenden Referenzpositionspunkte über eine Berechnung des arithmetischen Mittels oder über eine ARMA-Filterung durchzuführen. Für die Mittlung der dynamisch gesetzten Referenzpunkte summiert der ARMA-Filter (Autorecoursive Moving Average Filter) die Werte der Vergangenheit und den aktuelle gemessenen Wert mittels Gewichte auf.

Weiterhin wird vorgeschlagen, das Gebiet des WLAN-Netzes in ein Sektoren aufweisendes Raster zu unterteilen, wobei pro Sektor ein einziger dynamischer Referenzpositionspunkt erfassbar ist, um die Anzahl der dynamischen Referenzpositionspunkte zu begrenzen. Hierdurch wird der rechentechnische Aufwand enorm minimiert, ohne dass die Qualität der Navigation signifikant schlechter wird. Diese Maßnahme gewährleistet, dass sich die Anzahl der dynamisch erfassten Referenzpunkte in einem überschaubaren Rahmen hält. Die geschätzte Client-Position wird mit dem Raster verglichen. Es wird derjenige Sektor ermittelt, in dem sich der WLAN-Client gemäß der Schätzung aufhält. Die empfangenen Werte der Feldstärke werden dann unter Berücksichtigung eines Qualitätsmaßes in den Schwerpunkt des Sektors gemittelt. Die Rastereinteilung des durch das WLAN-Netz abgedeckten Gebiets beruht auf dem WGS-84 Bezugskoordinaten-System, was eine Rastereinteilung von 0,2-3 m ermöglicht. Beim Einsatz der dynamischen Karte hat sich ein Rasterabstand von 1 m als besonders effektiv erwiesen. Dieser Rasterabstand stellt einen optimalen Kompromiss zwischen der Genauigkeit und der Mehrdeutigkeit von Referenzpunkten bei zu engem Rasterabstand dar.

Gemäß einer anderen die Erfindung verbessernden Maßnahme wird vorgeschlagen, dass in das zur Lokalisierung des WLAN-Clients genutzte Szenenanalyseverfahren ein Plausibilitäts-Prüfungs-Algorithmus implementiert wird, welcher eine Plausibilitätskontrolle der als am nächsten passend selektierten Datensätze von dynamischen Referenzpunkten anhand der Bewegungsgeschwindigkeit des WLAN-Clients durchführt. In einem Szeneanalyseverfahren kann es immer wieder vorkommen, dass sich Referenzpunkte einander sehr ähnlich sind, jedoch geometrisch sehr weit auseinanderliegen. Für diesen Fall kann die besagte Plausibilitätsprüfung implementiert werden, welche Entscheidungen auf Basis der Bewegungsgeschwindigkeit des WLAN-Clients trifft. Vorzugsweise wird dabei dem WLAN-Client zunächst ein Zeitfenster geöffnet, das den Zeitraum für eine Aktualisierung der Positionsdaten zuzüglich einem groß bemessenen Sicherheitsfaktor für Übergangsverzögerungen repräsentiert. Aktualisiert der WLAN-Client die Position innerhalb des Zeitfensters, so wird die Plausibilitätsprüfung berücksichtigt und die Aktualisierungsgeschwindigkeit gemessen. Überschreitet der WLAN-Client dagegen das definierte Zeitfenster, so wird die Plausibilitätsprüfung nicht durchgeführt. Diese Maßnahme deckt den Fall ab, dass der WLAN-Client beispielsweise vorübergehend die Lokalisierung nicht verwendet oder sich ein schwerwiegender Fehler bei der Übertragung ereignet hat, beispielsweise ein Netzwerkfehler. Innerhalb des Zeitfensters steht dem Client ein gewisser möglicher Bewegungsradius zur Verfügung, in dem dieser sich prinzipiell in jede Richtung bewegen kann. Der Bewegungsradius wird durch die gemessene Aktualisierungszeit und einer vordefinierten Geschwindigkeit, im Regelfall 1,3 m/s berechnet. Als Mittelpunkt für den möglichen Bewegungsradius wird die zuvor geschätzte Position des WLAN-Clients festgelegt.

Das vorstehend allgemein beschriebene erfindungsgemäße Verfahren zur Lokalisierung eines innerhalb eines WLAN-Netzes befindlichen mobilen WLAN-Clients kann gerätetechnisch mit einem System durchgeführt werden, bei welchem der mobile WLAN-Client einige statische Referenzpunkte durch Einmessen von Feldstärken der WLAN-Stationen an bekannten Ortskoordinaten ermittelt und an einen Front-End-Server überträgt, der eine datensatzmäßige Zuordnung der gemessenen Feldstärken zu den jeweiligen Ortskoordinaten vornimmt. Die hieraus resultierenden Datensätze werden in einem am Front-End-Server angeschlossenen Datenbankserver gespeichert. Die zusätzlichen dynamischen Referenzpunkte werden mittels des sich durch das Gebiet des WLAN-Netzes bewegenden WLAN-Client ortsabhängig empfangene Feldstärken der WLAN-Stationen eingemessen und dem Front-End-Server zugeleitet. Der Front-End-Server ordnet diesen Messwerten die jeweils hierzu berechneten Ortskoordinaten zu, welche ebenfalls als Datensätze im angeschlossenen Datenbankserver gespeichert werden. Nach ausreichendem Einlernen genügend vieler dynamischer Referenzpunkte kann die Position eines WLAN-Clients innerhalb des Gebiets präzise ermittelt werden, in dem der Front-End-Server nach Maßgabe der vom WLAN-Client ermittelten Feldstärken mehrere am nächsten passende Datensätze von statischen und dynamischen Referenzpunkten über das Szenenanalyseverfahren selektiert und anschließend durch Schwerpunktberechnung die Lokalisierung der Clientposition vornimmt.

Der Front-End-Server kann auch die zusätzlichen vorstehend beschriebenen Algorithmen durchführen.

Gemäß einer der Erfindung verbessernden Maßnahme steht der Datenbankserver mit einem Map-User-Provider in Verbindung, von dem der Datenbankserver beispielsweise die Abbildung des Gebiets des WLAN-Netzes -z.B. einen Gebäudegrundriss - zu Visualisierungszwecken auf dem Display des WLAN-Clients (PDA) bezieht. Diese Maßnahme bezieht sich auf eine Anwendung der Erfindung im Rahmen einer Navigation. Natürlich ist es auch denkbar, dass die Erfindung im Rahmen anderer Dienste angewendet werden kann, welche Aktionen auf Grundlage einer Positionsbestimmung ausführen.

Weitere die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig.1: eine WLAN-System-Architektur zur Lokalisierung eines WLAN-Clients,
- Fig.2: ein Use-Case-Diagramm zur Verdeutlichung der Interaktion der einzelnen Systemkomponenten nach Fig.1, und
- Fig.3: eine Darstellung des Prinzips der Szenenanalyse unter Einbeziehung dynamischer Referenzpunkte.

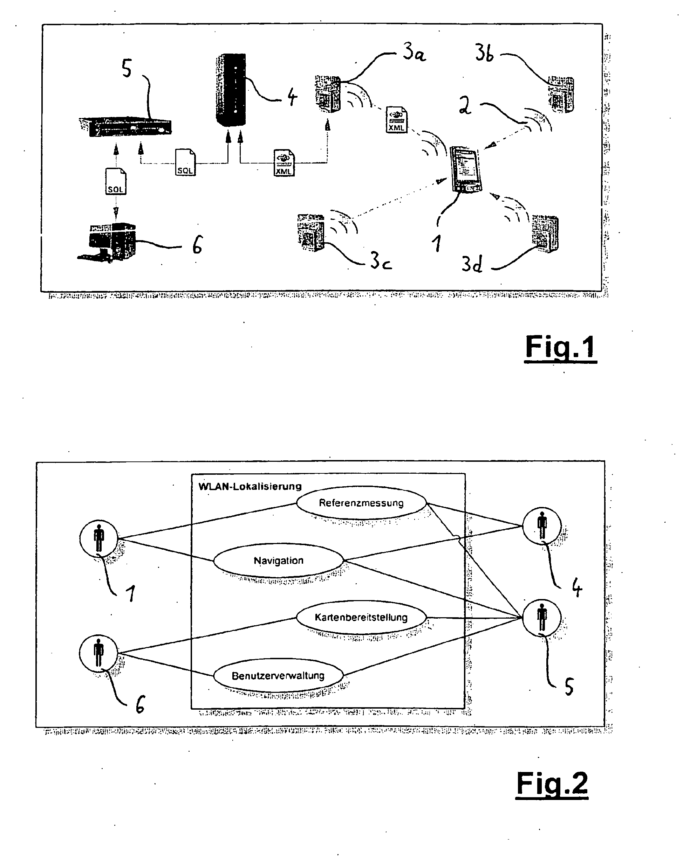

Gemäß Fig.1 besteht das System zur WLAN-Lokalisierung aus vier Teilsystemen, nämlich einem WLAN-Client 1, der sich innerhalb eines WLAN-Netzes 2 mit mehreren WLAN-Stationen 3a-3d befindet, einem mit den WLAN-Stationen 3a-3d in Verbindung stehenden Front-End-Server 4, einem Datenbankserver 5 sowie einem Map-User-Provider 6.

Der WLAN-Client 1 dient der Erfassung von empfangenen Feldstärken der WLAN-Stationen 3a-3d, welche für die Ermittlung der statischen und dynamischen Referenzpunkte sowie zur Indoor-Navigation benötigt werden. Das Prozessmanagement sowie die Lokalisierung der WLAN-Clients 1 werden vom Front-End-Server 4 übernommen. Mit Hilfe des Map-User-Providers 6 erfolgt die Bereitstellung von Abbildungen in Form des Grundrisses eines Gebäudes oder sonstigem Kartenmaterial. Darüber hinaus wird über den Map-User-Provider 6 in diesem Ausführungsbeispiel auch die Location und Benutzerverwaltung durchgeführt. Der Datenbankserver 5 verwaltet den Datenbestand hinsichtlich Benutzerdaten, Abbildungsmaterial und insbesondere die für die Lokalisierung dienenden Datensätze. Die Kommunikation zwischen den WLAN-Clients 1 und dem Front-End-Server 4 erfolgt auf XML-Basis via HTTP-Protokoll. Der Map-User-Provider 6 sowie der Front-End-Server 4 greifen mit Hilfe von SQL-Abfragen auf die Datensätze des Datenbankservers 5 zu.

Gemäß Fig.2 wird die Applikation anhand der Interaktion der einzelnen - vorstehend beschriebenen - Systemkomponenten mit Hilfe von Geschäftsprozessen, sogenannten Use-Cases erläutert: Ein Use-Case beinhaltet mehrere unterschiedliche Aufgaben die zur Erledigung eines Geschäftsprozessziels dienen. Innerhalb der Geschäftsprozessphasen eines Use-Cases sind ein oder mehrere Akteure involviert. Die Interaktion zwischen den Geschäftsprozessen und den agierenden Akteuren wird im Use-Case-Diagramm graphisch dargestellt, welches einen gesamten Überblick über die WLAN-Lokalisierung bietet.

Das dargestellte Use-Case-Diagramm für die WLAN-Lokalisierung beinhaltet die vier Geschäftsprozesse Referenzmessung, Navigation, Kartenbereitstellung (Abbildungsbereitstellung) und Benutzerverwaltung. Diese Use-Cases gewährleisten die Funktionalität und Abwicklung der WLAN-Lokalisierung. An den Geschäftsprozessen sind als Akteure ein oder mehrere Clients 1 der Front-End-Server 4, der Map-User-Provider 6 und der Datenbankserver 5 beteiligt. Die einzelnen Geschäftsprozesse sind von vielen unterschiedlichen statischen Gegebenheiten und dynamischen Einflussfaktoren abhängig.

Der Geschäftsprozess Referenzmessung enthält die Funktionalität für das Einmessen von Referenzpunkten und die persistente Speicherung der Messergebnisse. Der Use-Case-Navigation stellt ein Werkzeug für die Client-Lokalisierung auf Basis von WGS-84-Koordinaten sowie der Erstellung individueller dynamischer Feldstärkekarten für jedes Stockwerk eines Gebäudes, das im Datenbankserver 5 erfasst und eingemessen ist, bereit. Mit Hilfe der Kartenbereitstellung (Abbildungsbereitstellung) ist es möglich, Gebäude und Etagen mit den dazugehörigen Informationen, den WGS-84-Referenzpunkten und den Abbildungen im Datenbankserver 5 zu erfassen. Das Anlegen und Verwalten von Benutzerkonten und den dazugehörigen WLAN-Karten erfolgt über den Geschäftsprozess Benutzerverwaltung.

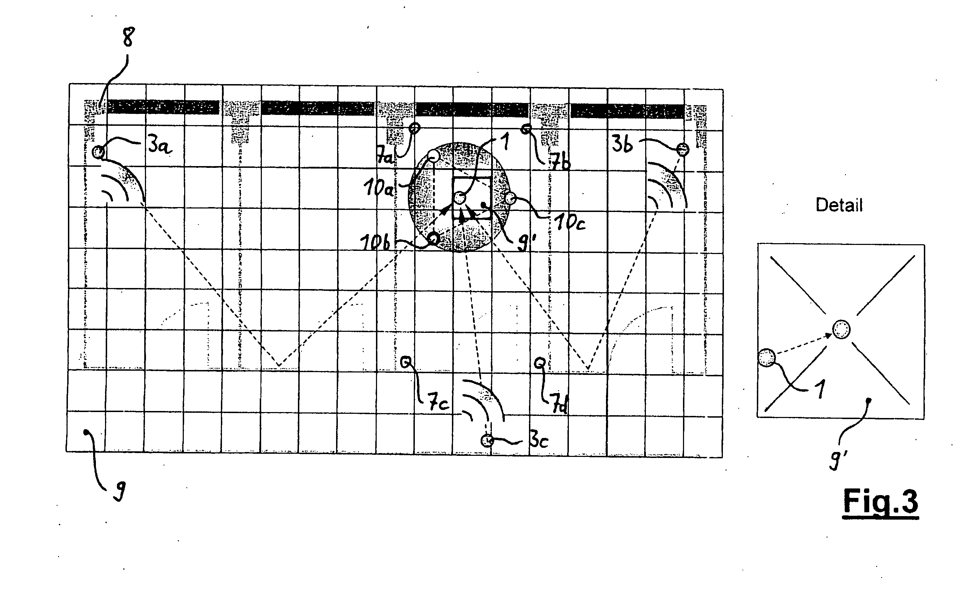

Die Fig.3 beschreibt eine Indoor-Navigation unter Verwendung des erfindungsgemäßen Verfahrens. Durch Einmessen von Feldstärken der WLAN-Stationen 3a-3c an bekannten Ortskoordinaten mittels WLAN-Client 1 werden zunächst einige statische Referenzpunkte 7a-7d ermittelt, welche als Startbedingung erforderlich sind. Die Ortskoordinaten des durch das WLAN-Netz 2 abgedeckten Gebiets innerhalb des Gebäudes werden nach dem Kartenreferenzsystem WGS-84 festgelegt. Auf einer hinterlegten graphischen Abbildung 8 in Form eines Grundrisses eines Gebäudes wird ein Raster aufgespannt, dessen einzelne Sektoren 9 eine Höhe und Breite von einem Meter aufweisen. Der Abbildung 8 werden die Ortskoordinaten zur Identifikation von Positionspunkten innerhalb der Abbildung 8 zugeordnet.

Zusätzlich zu den so ermittelten statischen Referenzpunkten 7a-7d werden selbstlernende weitere dynamische Referenzpunkte 10a-10c durch Einmessen von Feldstärken der WLAN-Stationen 7a-7d mittels sich durch das Gebiet des WLAN-Netzes 2 bewegenden WLAN-Clients 1 ermittelt, wobei berücksichtigt wird, dass die dynamischen Referenzpunkte ein bestimmtes Qualitätsmaß zu erfüllen haben (Plausibilitätsprüfung). Anschließend erfolgt eine datensatzmäßige Zuordnung der gemessenen Feldstärken zu den jeweils hierzu berechneten Ortskoordinaten und Speicherung dieser Datensätze im - hier nicht weiter dargestellten - Datenbankserver 5.

Die so gewonnen statischen Referenzpunkte 7a-7d sowie dynamischen Referenzpunkte 10a-10c dienen einer Lokalisierung des WLAN-Clients 1 durch Selektieren von mehreren am nächsten passenden Datensätzen von statischen und dynamischen Referenzpunkten über das an sich bekannte Szenenanalyseverfahren. Die hiermit durchgeführte Feldstärkemustererkennung beruht auf der Vorgehensweise, dass drei benachbarte Referenzpunkte 10a-10c gefunden werden, zu denen das Euklidische Abstandsmaß am geringsten ist. Mittels Schwerpunktberechnung der hierdurch aufgespannten Dreiecksfläche wird die Position des WLAN-Clients 1 ermittelt. Der mögliche Aufenthaltsradius des WLAN-Clients 1 wird durch den geometrischen Abstand der geschätzten Position zu demjenigen Referenzpunkt 10 des Referenz-Sets mit dem größten Wert für das Euklidische Distanzmaß repräsentiert. Zur Steigerung der Lokalisierungsgenauigkeit erfolgt eine zeitliche Mittlung der selektierten am nächsten passenden Referenzpositionspunkte 10a-10c über eine ARMA-Filterung.

Wie aus dem Detail von Fig.3 hervorgeht, wird die so geschätzte Position des WLAN-Clients 1 durch Zentrierung im relevanten Sektor 9'auf Rastermaß gebracht.

Die erfindungsgemäße Lösung lässt sich nicht allein auf WLAN-Netze anwenden. Genauso ist es auch möglich andere existierende oder zukünftige Funknetz-Standards zu Grunde zu legen, wie GSM, Bluetooth, DVB-T und dergleichen, soweit diese ortsfeste Sendestationen besitzen.

### Bezugszeichenliste

- **1**: WLAN-Client
- **2**: WLAN-Netz
- **3**: WLAN-Station
- **4**: Front-End-Server
- **5**: Datenbankserver
- **6**: Map-User-Provider
- **7**: statischer Referenzpunkt
- **8**: Abbildung (Karte)
- **9**: Sektor
- **10**: dynamischer Referenzpunkt

## Patentansprüche

1. Verfahren zur Lokalisierung eines innerhalb eines WLAN-Netzes (2) mit mehreren WLAN-Stationen (3°-3d) befindlichen mobilen WLAN-Clients (1) auf Basis des Szenenanalyseverfahrens, umfassend:
- Ermittlung von statischen Referenzpunkten (7a-7d) während eines ersten statischen Kalibrierungsprozesses, durch Einmessen von Feldstärken der WLAN-Stationen (3a-3d) an bekannten Ortskoordinaten mittels WLAN-Client (1) und datensatzmäßige Zuordnung der gemessenen Feldstärken zu den jeweiligen Ortskoordinaten,
gekenntzeichnet durch folgeende Verfahrensschritte:
selbstlernende Ermittlung von weiteren dynamischen Referenzpunkten (10a-10c) nach dem ersten statischen Kalibrierungsprozess durch Einmessen von Feldstärken der WLAN-Stationen (3a-3d) mittels sich durch das Gebiet des WLAN-Netzes (2) bewegenden WLAN-Clients (1), wobei im Sinne einer Plausibilitätsprüfung nur diejenigen dynamischen Referenzpunkte (10a-10c) berücksichtigt werden, die ein definiertes Qualitätsmaß erfüllen, und datensatzmäßige Zuordnung der gemessenen Feldstärken zu den jeweils hierzu berechneten Ortskoordinaten, um
- eine Lokalisierung eines WLAN-Clients (1) durch Selektieren von mehreren am nächsten passenden Datensätzen von statischen und dynamischen Referenzpunkten (7a-7d; 10a-10c) über das. Szenenanalyseverfahren durchzuführen, deren anschließend Gewichtung der geschätzten Position des WLAN-Clients (1) entspricht.

2. Verfahren nach Anspruch 1,
**dadurch gekennzeichnet, dass** zur Lokalisierung die drei am nächsten passenden Datensätze von statischen und dynamischen Referenzpunkten (7a-7d;10a-10c) durch Anwendung des Szenenanalyseverfahrens selektiert werden.

3. Verfahren nach Anspruch 1,
**dadurch gekennzeichnet, dass** eine gewichtete Verschiebung des Schwerpunktes zu dem besser passenden Referenzpunkt unter den am nächsten passenden Datensätzen der statischen und dynamischen Referenzpunkte (10-10c) durchgeführt wird, um die Schätzung der Position zu verbessern.

4. Verfahren nach Anspruch 1,
**dadurch gekennzeichnet, dass** die Ortskoordinaten des durch das WLAN-Netz (2) abgedeckten Gebiets nach dem erdzentrierten globalen Kartenreferenzsystem WGS-84 oder Gauss-Krüger festgelegt werden.

5. Verfahren nach Anspruch 1,
**dadurch gekennzeichnet, dass** die infolge der Lokalisierung geschätzte Position des WLAN-Clients (1) auf einer graphischen Abbildung (8) des Gebiets des WLAN-Netzes (2) visualisiert wird, wobei der Abbildung (8) die Ortskoordinaten zur Identifikation von Positionspunkten innerhalb der Abbildung (8) zugeordnet werden.

6. Verfahren nach Anspruch 5,
**dadurch gekennzeichnet, dass** die Abbildung (8) des Gebiets des WLAN-Netzes (2) den Grundriss eines Gebäudes, ein Luftbild, ein Lageplan oder ein Bauplan wiedergibt, um eine Navigation zu ermöglichen.

7. Verfahren nach Anspruch 1,
**dadurch gekennzeichnet, dass** zur Steigerung der Lokalisierungsgenauigkeit eine zeitliche Mittlung der selektierten am nächsten passenden Referenzpositionspunkte (10a-10c) über eine Berechnung des arithmetischen Mittels durchgeführt wird.

8. Verfahren nach Anspruch 1,
**dadurch gekennzeichnet, dass** zur Steigerung der Lokalisierungsgenauigkeit eine dynamische Mittlung der selektierten am nächsten passenden Referenzpositionspunkte (10-10c) über eine ARMA-Filterung durchgeführt wird.

9. Verfahren nach einem der vorstehenden Ansprüche,
**dadurch gekennzeichnet, dass** das Gebiet des WLAN-Netzes (2) in ein Sektoren (9) aufweisendes Raster unterteilt wird, wobei pro Sektor (9) ein einziger dynamischer Referenzpositionspunkt (1') erfassbar ist, um die Anzahl dynamischer Referenzpositionspunkte zu begrenzen.

10. Verfahren nach Anspruch 9,
**dadurch gekennzeichnet, dass** die Sektoren (9) des Rasters eine Länge und Breite von 0,2 bis 3 Metern, vorzugsweise 1 Meter, aufweisen.

11. Verfahren nach einem der vorstehenden Ansprüche,
**dadurch gekennzeichnet, dass** in das zur Lokalisierung des WLAN-Clients (1) genutzte Szenenanalyseverfahren ein Plausibilitätsprüfungsalgorithmus implementiert wird, welcher eine Plausibilitätskontrolle der als am nächsten passend selektierten Datensätze von statischen und dynamischen Referenzpunkten anhand der Bewegungsgeschwindigkeit des WLAN-Clients (1) durchführt.

12. System zur Lokalisierung eines innerhalb eines WLAN-Netzes (2) mit mehreren WLAN-Stationen (3a-3d) befindlichen mobilen WLAN-Clients (1), wobei der WLAN-Client (1) statische Referenzpunkte (7a-7d) während eines ersten statischen Kalibrierungsprozesses durch Einmessen von Feldstärken der WLAN-Stationen (3a-3d) an bekannten Orstkoordinaten ermittelt und an einen Front-End-Server (4) überträgt, der eine datensatzmäßige Zuordnung und Speicherung der gemessenen Feldstärken zu den jeweiligen Ortskoordinaten vornimmt,
**dadurch gekennzeichnet, dass** zur selbstlernenden Ermittlung von weiteren dynamischen Referenzpunkten (10a-10c) nach dem ersten statischen Kalibrierungsprozess der sich durch das Gebiet des WLAN-Netzes (2) bewegende WLAN-Client (1) ortsabhängig empfangene Feldstärken der WLAN-Stationen (3a-3d) einmisst,
wobei im Sinne einer Plausibilitätsprüfung nur diejenigen dynamischen Referenzpunkte berücksichtigt werden, die ein definiertes Qualitätsmaß erfüllen, die der Front-End-Server (4) datensatzmäßig zu den jeweils hierzu berechneten Ortskoordinaten zuordnet und speichert, um einen WLAN-client (1) zu lokalisieren, indem der Front-End-Server (4) nach Maßgabe der vom WLAN-Client (1) ermittelten Feldstärken mehrere am nächsten passende Datensätze von statischen und dynamischen Referenzpunkten (7a-7d; 10a-10c) über das Szenenanalyseverfahren selektiert und anschließend gewichtet, um die geschätzte Position des WLAN-Clients (1) zu ermitteln.

13. System nach Anspruch 12,
**dadurch gekennzeichnet, dass** der Datenbankserver (5) mit einem Map/User-Provider (6) in Verbindung steht, von dem der Datenbankserver (5) zumindest die Abbildung (8) des Gebiets des WLAN-Netzes (2) zu Visualisierungszwecken bezieht.

14. System nach Anspruch 12,
**dadurch gekennzeichnet, dass** der WLAN-Client (1) als mobiles Endgerät mit graphischer Benutzeroberfläche nach Art eines Smartphons oder eines PDA's ausgebildet ist.

15. Computerprogrammprodukt für ein System nach einem der Ansprüche 12 bis 14 welches nach einem Verfahren nach einem der Ansprüche 1 bis 11 betreibbar ist, wobei die Routine zur Berechnung der geschätzten Position des WLAN-Clients (1) durch entsprechende in einer Software hinterlegte Steuerungsbefehle umgesetzt ist.

16. Datenträger mit einem Computerprogrammprodukt nach Anspruch 15.

## Claims

1. Method for the localisation of a mobile WLAN client (1) located within a WLAN network (2) having a plurality of WLAN stations (3a-3d) on the basis of the scene analysis method, including:
- ascertainment of static reference points (7a-7d) during a first static calibration process, by measuring field strengths of the WLAN stations (3a-3d) at known location coordinates by means of the WLAN client (1) and assignment of the measured field strengths to the respective location coordinates in terms of data records,
**characterized by** the following method steps:
- self-learning ascertainment of further dynamic reference points (10a-10c) after the first static calibration process by measuring field strengths of the WLAN stations (3a-3d) by means of the WLAN client (1) moving through the region of the WLAN network (2), wherein in the sense of a plausibility test account is taken of only those dynamic reference points (10a-10c) which fulfil a defined quality measure, and assignment of the measured field strengths to the location coordinates calculated in each case for this purpose in terms of data records, in order
- to carry out by way of the scene analysis method a localisation of a WLAN client (1) by selecting a plurality of closest matching data records of static and dynamic reference points (7a-7d; 10a-10c), the subsequent weighting of which corresponds to the estimated position of the WLAN client (1).

2. Method according to claim 1,
**characterized in that** for the localisation the three closest matching data records of static and dynamic reference points (7a-7d; 10a-10c) are selected by applying the scene analysis method.

3. Method according to claim 1,
**characterized in that** a weighted displacement of the centre of gravity to the better matching reference point among the closest matching data records of the static and dynamic reference points (10-10c) is carried out in order to improve the estimation of the position.

4. Method according to claim 1,
**characterized in that** the location coordinates of the region covered by the WLAN network (2) are established in accordance with the earth-centred global map reference system WGS-84 or Gauss-Krilger.

5. Method according to claim 1,
**characterized in that** the position, estimated as a consequence of the localisation, of the WLAN client (1) is displayed on a graphic imaging (8) of the region of the WLAN network (2), the location coordinates being assigned to the imaging (8) for the identification of position points within the imaging (8).

6. Method according to claim 5,
**characterized in that** the imaging (8) of the region of the WLAN network (2) represents the outline of a building, an aerial image, a layout plan or a construction plan in order to allow navigation.

7. Method according to claim 1,
**characterized in that**, in order to increase the localisation precision, averaging over time of the selected closest matching reference position points (10a-10c) is carried out by calculating the arithmetic mean.

8. Method according to claim 1,
**characterized in that**, in order to increase the localisation precision, dynamic averaging of the selected closest matching reference position points (10-10c) is carried out by way of ARMA filtering.

9. Method according to one of the preceding claims,
**characterized in that** the region of the WLAN network (2) is subdivided into a grid comprising sectors (9), wherein for each sector (9) a single dynamic reference position point (1') can be detected in order to limit the number of dynamic reference position points.

10. Method according to claim 9,
**characterized in that** the sectors (9) of the grid have a length and width of 0.2 to 3 metres, preferably 1 metre.

11. Method according to one of the preceding claims,
**characterized in that** the scene analysis method used for the localisation of the WLAN client (1) implements a plausibility test algorithm which carries out a plausibility check of the data records, selected as being the closest matching, of static and dynamic reference points based on the movement speed of the WLAN client (1).

12. System for the localisation of a mobile WLAN clients (1) located within a WLAN network (2) having a plurality of WLAN stations (3a-3d), the WLAN client (1) ascertaining static reference points (7a-7d) during a first static calibration process by measuring field strengths of the WLAN stations (3a-3d) at known location coordinates and transmitting them to a front end server (4) which assigns the measured field strengths to the respective location coordinates in terms of data records and stores them,
**characterized in that**, for the self-learning ascertainment of further dynamic reference points (10a-10c), after the first static calibration process the WLAN client (1) moving through the region of the WLAN network (2) measures field strengths of the WLAN stations (3a-3d) received depending on location, wherein in the sense of a plausibility test account is taken of only those dynamic reference points which fulfil a defined quality measure and which the front end server (4) assigns to the location coordinates calculated in each case for this purpose in terms of data records and stores in order to localise a WLAN client (1), **in that**, by way of the scene analysis method, the front end server (4) selects, in accordance with the field strengths ascertained by the WLAN client (1), a plurality of closest matching data records of static and dynamic reference points (7a-7d; 10a-10c) and subsequently weights them in order to ascertain the estimated position of the WLAN client (1).

13. System according to claim 12,
**characterized in that** the database server (5) is connected to a map/user provider (6) from which the database server (5) obtains at least the imaging (8) of the region of the WLAN network (2) for display purposes.

14. System according to claim 12,
**characterized in that** the WLAN client (1) is embodied as a mobile terminal having a graphic user surface in the manner of a smartphone or a PDA.

15. Computer program product for a system according to one of claims 12 to 14, which can be operated using a method according to one of claims 1 to 11, wherein the routine for calculating the estimated position of the WLAN client (1) is implemented by corresponding control commands filed in a software package.

16. Data carrier having a computer program product according to claim 15.

## Revendications

1. Procédé de localisation d'un client WLAN (1) mobile situé à l'intérieur d'un réseau WLAN (2) comportant plusieurs stations WLAN (3a-3d) sur la base du procédé d'analyse de scènes, comprenant :
- la détection de positions de référence statiques (7a-7d) au cours d'un premier processus de calibrage statique par la mesure d'intensités de champ des stations WLAN (3a-3d) au niveau de coordonnées locales connues au moyen du client WLAN (1) et l'affectation, sous forme de séries de données, des intensités de champ mesurées aux coordonnées locales respectives, **caractérisé par** les étapes suivantes :
- détermination autodidacte d'autres positions de référence dynamiques (10a-10c) à la suite du premier processus de calibrage statique par la mesure d'intensités de champ des stations WLAN (3a-3d) au moyen du client WLAN (1) se déplaçant à travers la zone du réseau WLAN (2), seules les positions de référence dynamiques (10a-10c) répondant à un critère de qualité défini étant prises en considération au sens d'un contrôle de plausibilité, et affectation, sous forme de séries de données, aux coordonnées locales obtenues respectivement par calcul à cet effet, afin de
- localiser un client WLAN (1) en sélectionnant plusieurs séries de données les plus proches de positions de référence statiques et dynamiques (7a-7d; 10a-10c) moyennant le procédé d'analyse de scènes dont la pondération qui suit correspond à la position estimée du client WLAN (1).

2. Procédé selon la revendication 1,
**caractérisé en ce que**, pour la localisation, les trois séries de données les plus proches de positions de référence statiques et dynamiques (7a-7d; 10a-10c) sont sélectionnées en appliquant le procédé d'analyse de scènes.

3. Procédé selon la revendication 1,
**caractérisé en ce qu'**un décalage pondéré du centre de gravité est réalisé par rapport à la position de référence convenant mieux parmi les séries de données des positions de référence statiques et dynamiques (10-10c) les plus proches afin d'améliorer l'estimation de la position.

4. Procédé selon la revendication 1,
**caractérisé en ce que** les coordonnées locales de la zone couverte par le réseau WLAN (2) sont déterminées suivant le système de référence cartographique global géocentrique WGS-84 ou Gauss-Krüger.

5. Procédé selon la revendication 1,
**caractérisé en ce que** la position du client WLAN (1) estimée par suite de la localisation est visualisée sur une représentation graphique (8) de la zone du réseau WLAN (2), les coordonnées locales étant affectées à la représentation (8) pour l'identification de positions à l'intérieur de la représentation (8).

6. Procédé selon la revendication 5,
**caractérisé en ce que** la représentation (8) de la zone du réseau WLAN (2) reproduit le tracé d'un bâtiment, une image aérienne, un plan de situation ou un plan de construction afin de permettre une navigation.

7. Procédé selon la revendication 1,
**caractérisé en ce que**, pour augmenter la précision de localisation, une moyenne temporelle des positions de référence (10a-10c) sélectionnées les plus proches est établie en calculant la moyenne arithmétique.

8. Procédé selon la revendication 1,
**caractérisé en ce que**, pour augmenter la précision de localisation, une moyenne dynamique des positions de référence (10-10c) sélectionnées les plus proches est établie par filtrage ARMA.

9. Procédé selon l'une des revendications précédentes,
**caractérisé en ce que** la zone du réseau WLAN (2) est divisée en trame présentant des secteurs (9), une seule position de référence (1') dynamique pouvant être détectée par secteur (9), afin de limiter le nombre de positions de référence dynamiques.

10. Procédé selon la revendication 9,
**caractérisé en ce que** les secteurs (9) de la trame présentent une longueur et une largeur comprises entre 0,2 et 3 mètres, de préférence de 1 mètre.

11. Procédé selon l'une des revendications précédentes,
**caractérisé en ce qu'**un algorithme de contrôle de plausibilité est implanté dans le procédé d'analyse de scènes utilisé pour la localisation du client WLAN (1) et réalise un contrôle de plausibilité des séries de données de positions de référence statiques et dynamiques sélectionnées comme étant les plus proches, à l'aide de la vitesse de déplacement du client WLAN (1).

12. Système de localisation d'un client WLAN (1) mobile situé à l'intérieur d'un réseau WLAN (2) comportant plusieurs stations WLAN (3a-3d), dans lequel le client WLAN (1) détermine des positions de référence statiques (7a-7d) au cours d'un premier processus de calibrage statique par mesure d'intensités de champ des stations WLAN (3a-3d) au niveau de coordonnées locales connues et les transmet à un serveur frontal (4) qui affecte et enregistre les intensités de champ mesurées, sous forme de séries de données, relativement aux coordonnées locales respectives,
**caractérisé en ce que**, pour la détermination autodidacte d'autres positions de référence dynamiques (10a-10c) à la suite du premier processus de calibrage statique, le client WLAN (1) qui se déplace à travers la zone du réseau WLAN (2) mesure des intensités de champ des stations WLAN (3a-3d) reçues en fonction de la position, les seules positions de référence dynamiques prises en considération au sens d'un contrôle de plausibilité étant celles qui répondent à un critère de qualité défini et que le serveur frontal (4) affecte et enregistre, sous forme de séries de données, relativement aux coordonnées locales respectivement calculées à cet effet, afin de localiser un client WLAN (1) en sélectionnant, en fonction des intensités de champ déterminées par le client WLAN (1), plusieurs séries de données de positions de référence statiques et dynamiques (7a-7d; 10a-10c) les plus proches, moyennant le procédé d'analyse de scènes, avant de les pondérer afin de déterminer la position estimée du client WLAN (1).

13. Système selon la revendication 12,
**caractérisé en ce que** le serveur de base de données (5) est relié à un fournisseur de cartes/utilisateur (6) chez lequel le serveur de base de données (5) se procure au moins la représentation (8) de la zone du réseau WLAN (2) aux fins de visualisation.

14. Système selon la revendication 12,
**caractérisé en ce que** le client WLAN (1) est réalisé sous la forme d'un terminal mobile à interface utilisateur graphique du type Smartphone ou PDA.

15. Produit de programme informatique destiné à un système selon l'une des revendications 12 à 14 susceptible de fonctionner selon un procédé selon l'une des revendications 1 à 11, la routine de calcul de la position estimée du client WLAN (1) étant mise en oeuvre par des instructions de commande consignées dans un logiciel.

16. Support de données comportant un produit de programme informatique selon la revendication 15.
